(19) Europäisches Patentamt
European Patent Office
Office européen des brevets

(11) Veröffentlichungsnummer: **0 066 830 B2**

(12) # NEUE EUROPÄISCHE PATENTSCHRIFT

(45) Veröffentlichungstag der neuen Patentschrift: **30.01.91**

(51) Int. Cl.[5]: **C 08 J 9/14,** C 08 L 75/04 // C09K3/30

(21) Anmeldenummer: **82104782.6**

(22) Anmeldetag: **01.06.82**

(54) **1-Komponentensysteme zur Herstellung von Polyurethanschaumstoffen in verbesserter Formstabilität.**

(30) Priorität: **09.06.81 DE 3122790**

(43) Veröffentlichungstag der Anmeldung: **15.12.82 Patentblatt 82/50**

(45) Bekanntmachung des Hinweises auf die Patenterteilung: **13.08.86 Patenblatt 86/33**

(45) Bekanntmachung des Hinweises auf die Entscheidung über den Einspruch: **30.01.91 Patentblatt 91/05**

(84) Benannte Vertragsstaaten: **AT BE CH DE FR GB IT LI NL**

(56) Entgegenhaltungen:
DE-A-1 237 774
DE-A-2 045 852
DE-A-2 768 114
DE-C- 955 095
DE-C-1 128 133
DE-C-1 128 133
FR-A-2 128 632
GB-A- 795 335
GB-A- 907 971
GB-A-1 077 888
GB-A-2 053 943

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Kluth, Hermann**
**Degerstrasse 48**
**D-4000 Düsseldorf 1 (DE)**
Erfinder: **Wegner, Jürgen, Dr.**
**Siegfriedstrasse 21**
**D-4000 Düsseldorf 11 (DE)**

(56) References cited:
**Kunststoff-Handbuch Band 7, Polyurethane, Carl Hanser Verlag München,(1966), Seite 448**
**Kunststoffe im Bau 17. Jahrgang (1982)Heft 4, Seiten 188-190 (D.I.L. Bayer et al "Beurteilungskriterien und Anforderungen für Einkomponenten PU-Schaum"**

EP 0 066 830 B2

Courier Press, Leamington Spa, England.

**Beschreibung**

Als neuere Entwicklung auf dem Gebiet synthetischer Schaumstoffe ist bekannt, Polyurethanschaumstoffe aus einem 1-Komponentensystem derart herzustellen, daß man Gemische von Polyolen, Schaumstabilisatoren, Weichmachern und gegebenenfalls weiteren Hilfsmitteln, wie Beschleuniger mit überschüssigen organischen Di- und/oder höheren Polyisocyanaten unter Druck in Gegenwart von verflüssigten Treibgasen zu freie Isocyanatgruppen enthaltenden Präpolymeren umsetzt. Diese Reaktion erfolgt zweckmäßig ineinem Druckbehälter z.B. in Aerosoldosen. Beim Austrag und Entspannen der Masse über ein Druckventil wird dann unter Verdampfen des Treibmittels ein sog. Froth-Schaum gebildet, der durch Einwirkung der Umgebungsfeuchtigkeit über die noch freien Isocyanatgruppen vernetzt und in vielfältiger Weise, z.B. als Konstruktionswerkstoff, eingesetzt werden kann. Aus der einschlägigen Patentliteratur sei auf die deutschen Offenlegungsschriften 20 45 852, 27 58 114 und 30 22 578 sowie auf die US—PS 38 30 760 verwiesen.

Ein gewisser Nachteil der auf diese Weise hergestellten Polyurethanschaumstoffe ist ihre Neigung, auch nach Vernetzung bei Raumtemperatur ziemlich langsam, bei erhöhter Temperatur oder erhöhter Luftfeuchtigkeit relativ schnell eine zusätzliche Volumenausdehnung durch zumachen. Eine solche Volumenausdehnung kann zur Deformation an eingeschäumten Objekten beispielsweise Türzargen oder Fensterrahmen führen.

Zur Behebung dieses Nachteils hat man bereits versucht, durch einen recht hohen Anteil von Diphenylmethandiisocyanat oder durch Zusatz von Trichlorfluormethan als Cotreibmittel sowie durch die Verwendung spezieller stickstoffhaltiger Polyole die unerwünschte Neigung der nachträglichen Volumenausdehnung auf ein vertretbares Maß zu vermindern.

Allerdings stellt man noch immer fest, daß die nach den bekannten Verfahren hergestellten Polyurethanschaumstoffe der hier beschreibenen Art, insbesondere bei leicht bis mäßig erhöhten Temperaturen von beispielsweise 40—70° sowohl bei der Trockenlagerung als auch bei 90% relativer Luftfeuchtigkeit eine nachträgliche Volumenausdehnung von etwa 10 bis 15% zeigen.

Aufgabe der vorliegenden Erfindung ist es, diese unerwünschte nachträgliche Volumenausdehnung weitgehend einzuschränken bzw. zu beseitigen.

Überraschenderweise wurde festgestellt, daß durch die Mitverwendung sehr geringer Mengen an sich bekannter oberflächenaktiver Polysiloxanverbindungen mit Entschäumerwirkung für wässrige und/oder organische Systeme in den bekannten 1-Komponentensystemen der geschilderten Art eine Stabilisierung des Schaumstoffvolumens im erwünschten Sinne erreicht werden kann.

Gegenstand der Erfindung sind als Konstruktionswerkstoff geeignete Polyurethanschaumstoffe bildende 1-Komponentensysteme, die in einem Druckbehälter vorliegen, und Mischungen sind von

a) Isocyanatgruppen enthaltenden Präpolymeren aus der Umsetzung von Hydroxylgruppen enthaltenden Polyestern und/oder Polyethern (Polyole) mit Polyisocyanaten,

b) üblichen Hilfsstoffen für Polyurethanschäume und

c) Treibmitteln, die im Druckbehälter verflüssigt vorliegen, bei Druckspannung rasch verdampfen und vorzugsweise einen Siedepunkt unterhalb etwa 20°C bei Normalbedingungen aufweisen, und

d) Organopolysiloxanen welche dadurch gekennzeichnet sind, daß sie als Komponente d) 0,015 bis 0,1 Gewichtsprozent — bezogen auf Polyole + Hilfsstoffe — Dimethylpolysiloxane und/oder perfluorierte Alkylgruppen enthaltende Polysiloxane enthalten, die eine dynamische Viskosität zwischen 20 und 300 000 $mm^2 \cdot s^{-1}$ (bei 25°C) aufweisen, wobei insbesondere die dynamische Viskosität im Bereich zwischen 100 und 10 000 $mm^2 \cdot s^{-1}$ (25°C) liegt.

Schließlich betrifft die Erfindung das Verfahren zur Herstellung von formstabilen Polyurethanschaumstoffen durch Verschäumen eines 1-Komponentensystems, das dadurch gekennzeichnet ist, daß man zu den üblichen Präpolymeren auf Basis von Hydroxylgruppen enthaltenden Polyestern und/oder Polyethern, die mit organischen Polyisocyanaten im Überschuß umgesetzt worden sind und in Abmischung mit üblichen Hilfsstoffen vorliegen, 0,015 bis 0,1 Gewichtsprozent — bezogen auf das Gewicht von Polyol und Hilfsstoffen — eines oberflächenaktiven Dimethyl-Polysiloxans und/oder perfluorierte Alkylgruppe enthaltenden Polysiloxans zusetzt.

Unter der Bezeichung "Polysiloxanverbindungen mit Entschäumerwirkung" sind zahlreiche Handelsprodukte auf dem Markt. Die wichtigsten sind zwei Gruppen zuzuordnen, nämlich den Dimethylpolysiloxanen bzw. den perfluorierte Alkylgruppen — insbesondere Trifluormethylgruppen — enthaltenden Polysiloxanen. Für die Zwecke der Erfindung kommt den Dimethylpolysiloxanen besondere praktische Bedeutung zu.

Die erfindungsgemäß eingesetzten Polysiloxan-Entschäumer weisen bei 25°C eine dynamische Viskosität zwischen 20 und 300 000 $mm^2 \cdot s^{-1}$ auf. Innerhalb dieses Bereiches können dynamische Viskositäten von etwa 100 bis 10 000 $mm^2 \cdot s^{-1}$ bevorzugt sein. Das gilt insbesondere für die Klasse der perfluorierte Alkylgruppen enthaltenden Polysiloxane.

Bei den erfindungsgemäß einzusetzenden Dimethylpolysiloxanen handelt es sich um sogenannte Methylsilikonöle, wie sie im Handel erhältlich und durch die folgende allgemeine Formel gekennzeichnet sind:

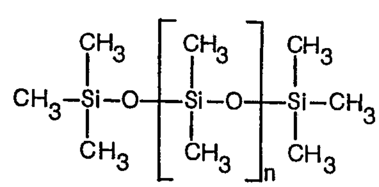

In dieser allgemeinen Formel bedeuten n eine ganze Zahl, die in Abhängigkeit von der Molekülgröße steht. Zwechmäßigerweise werden die erfindungsgemäß einzusetzenden Methylsilikonöle jedoch durch ihre zuvor definierte dynamische Viskosität gekennzeichnet.

Ähnlich wie die Methylsilikonöle verhalten sich im erfindungsgemäßen Vorschlag die perfluorierte Alkylgruppen enthaltenden Polysiloxane, die ebenfalls im Handel als Entschäumer erhältlich sind, aber auch — wie die Methylsilikonöle — für die verschiedensten Verwendungszwecke eingesetzt werden können, beispielsweise als Hydrophobierungsmittel, Trenn- und Gleitmittel, als Hilfsmittel bei der Lackherstellung, als Poliermittel und dergleichen mehr neben dem Einsatz als Entschäumer für wäßrige und/oder organische Systeme.

Erfindungsgemäß hat es sich als besonders günstig erwiesen, etwa 0,02 bis 0,05 Gewichtsprozent eines Dimethyl-polysiloxane bzw. eines perfluorierte Alkylgruppen enthaltenden Polysiloxane des angegebenen dynamischen Viskositätsbereichs den 1-Komponentenmischungen zuzusetzen, wobei sich diese Gewichtsprozentangaben wieder auf das Gewicht von Polyolkomponenten + Hilfsstoffe bezieht.

Im Rahmen der üblichen Hilfsstoffe für Polyurethanschäume kommt erfindungsgemäß besondere Bedeutung den Alkylsilikon-Polyoxyalkylen-Copolymeren zu. Eine zusammenfassende Darstellung der Herstellung von Polyurethanschaumstoffen unter Mitverbindung solcher Schaumstabilisatoren findet sich beispielsweise bei Saunders and Frisch "Polyurethanes, Chemistry and Technology", Band XVI der Serie "High Polymers", Interscience Publishers, New York, London, Teil 1 (1962) und insbesondere Teile 2 (1964), Seiten 67 bis 69. Verwiesen sei weiterhin auf "Plaste und Kautschuk" 28, Jahrgang (1981), Seite 73 bis 76 sowie auf die DE—PS 12 33 133 und die DE—OS 22 08 149. Gerade auch im Rahmen der Vorschläge des Standes der Technik zu den hier betroffenen unter dem Druck eines verflüssigten Triebmittels stehenden 1-Komponentensystemen ist die Mitverbindung dieser Schaumstabilisatoren vorgesehen, vergleiche hierzu die eingangs genannte Literatur. So wird beispielsweise auf Seite 10 der DE—OS 27 58 114 beschrieben, bei der Herstellung von Polyurethanschaumstoffen auf dem hier betroffenen Weg Siloxanoxyalkylenmischpolymerisate als Schaumstabilisatoren zuzusetzen. Es zeigt sich allerdings, daß schaumstabilisierende Polysilikonverbindungen der bisher in 1-Komponentensystemen eingesetzten Art keinen Einfluß auf die nachträgliche Volumenzunahme des erhärteten Schaumstoffs haben. Diese Schaumstabilisatoren auf Basis von Siloxanalkylenmischpolymerisaten werden zudem in wesentlich größerer Menge eingesetzt als die im Rahmen des erfindungsgemäßen Vorschlages mitzuverwendenden Entschäumer auf Basis von Dimethylsilikonölen bzw. entsprechenden perfluorierten Polysilikonverbindungen.

Gleichwohl ist im Rahmen einer besonders bevorzugten Ausführungsform auch für die Erfindung die Mitverwendung von Schaumstabilisatoren auf Siloxanbasis, insbesondere die Mitverwendung von Siloxanoxyalkylenmischpolymerisaten von besonderer Bedeutung. Geeignet sind beispielsweise Siloxanoxyalkylenmischpolymerisate, die etwa 5 bis 25% Siloxaneinheiten und 95 bis 75% Oxyalkylengruppierungen enthalten. Eine besonders geeignete Oxyalkylengruppierung kann die Oxypropylengruppe sein. Diese Schaumstabilisatoren werden bevorzugt in Mengen von etwa 1 bis 5 Gewichtsprozent-bezogen auf das Gewicht der eingesetzten Polyole und Hilfsstoffe-verwendet. In dieser für die Erfindung besonders wichtigen Ausführungsform werden also zwei unterschiedliche Typen von Siliciumorganischen Polymerverbindungen gemeinsam verwendet, die bisher bekannten Schaumstabilisatoren auf Basis von Siloxanoxyalkylenmischpolymerisaten in vergleichsweise großer Menge und die Dimethyl-Polysiloxane bzw. ihre perfluorierten Derivate mit Entschaümerwirkung in vergleichsweise sehr viel geringeren Mengen.

Weitere übliche Hilfsstoffe der PUR-Schaumstoffherstellung sind Weichmacher, insbesondere flammhemmende Weichmacher, die beispielsweise in Mengen von 25 bis 35 Gewichtsprozent-bezogen auf Polyole + Hilfsstoff-Verwendung finden können. Übliche Weichmachungsmittel, die die Flammfestigkeit von Polyurethanschaumstoffen vergrößern, sind Phosphor- und/oder Halogenatome enthaltende Verbindungen wie Trikresylphosphat, Tris-2-chlorethylphosphat, Tris-β-chlorpropylphosphat und Tris-2,3-dibrom-propylphosphat. Zusätzlich können als Flammschutzmittel beispielsweise verwendet werden: Chlorparaffine, Halogenphosphite, Ammoniumphosphat und halogen- und phosphorhaltige Harze.

Als weitere Hilfsstoffe der Polyurethanherstellung können die bekannten Katalysatoren bzw. Katalysator-Systeme eingesetzt werden, wie sie beispielsweise in der genannten Literaturstelle Saunders and Frisch "Polyurethanes, Chemistry and Technology" Teil 2 (1964), S. 45 ff beschrieben sind. Besonders zu nennen sind hier tertiäre Amine von der Art aliphatischer tertiärer Amine, N-substituierter Morpholine bzw. N,N'-substituierte Piperazine. Es fällt allerdings in ein bevorzugte Ausführungsform der erfindungsgemäßen Lehre, auf den Zusatz solcher Katalysatoren zu verzichten und statt dessen die erwünschte Reaktivität der polyurethanbildenden Komponenten durch geeignete Auswahl von Polyisocyanaten und/oder Polyolen sicherzustellen.

So kann es zweckmäßig sein, als Polyolkomponenten wenigstens teilweise tertiäre Aminogruppen enthaltende Polyester- und/oder Polyether-Polyole zu verwenden, wie sie bereits für die Herstellung von sogenannten Froth-Schaümen bekannt geworden sind. Zweckmäßig kann es sein, von einem Polyol-Gemisch auszugehen, das aus oxypropylierten Aminen und/oder Polypropylenglykol besteht, das in üblicher Weise polymerisiert wurde, wobei die Molekulargewichte

dieser Komponenten zwischen etwa etwa 500 und 10 000, insbesondere zwischen 800 und 2 000 liegen solten. Auch ist es möglich, OH-Gruppenhaltige Polyester einzusetzen, welche durch Veresterung mehrfunktioneller Alkohole wie Glycerin, Ethylenglykol, Diethylenglykol mit Polycarbonsäuren wie Glutarsäure, Sebacinsäure, Isophthalsäure oder dergleichen hergestellt worden sind. Als Polyole geeignet sind beispielsweise allgemeinen di- bis octafunktionelle Polyester- und/oder Polyether-Polyole, wobei Gemische aus Stickstoffgruppen enthaltenden Polyolen und stickstoffgruppenfreien Polyolen bevorzugt sind. Geeignete Stickstoffgruppenhaltige Polyester-Polyole können beispielsweise aus Polycarbonsäuren, vorzugsweise Dicarbonsäuren und Di- und/oder Trialkanolaminen, zum Beispiel Di- und/oder Triisopropanolamin, gegebenenfalls im Gemisch mit mehrwertigen Alkoholen oder aus Mischungen von Diaminen wie Ethylendiamin und mehrweitigen Alkoholen hergestellt werden. Geeignete Polycarbonsäuren sind beispielsweise Glutarsäure, Bersteinsäure, Adipinsäure, Sebacinsäure, Phthalsäure, Isophthalsäure oder Terephthalsäure. Geeignete mehrfunktionelle Alkohole sind beispielsweise Ethylenglykol, Propandiole, insbesondere 1,2- bzw. 1,3-Propandiol oder auch Dil höherer Kohlenstoffzahl wie Butandiol bzw. Hexandiol, Diethylenglykol, Dipropylenglykol, aber auch höher funktionelle Alkohole wie Glycerin, Trimethylolpropan bzw. Pentaerythrit. Entsprechende Polyether-Polyole können in an sich bekannter Weise aus Alkylenoxiden mit begrenzter Kohlenstoffzahl, beispielsweise 2 bis 5 Kohlenstoffatomen im Alkylenrest hergestellt werden wobei zur Herstellung Stickstoffgruppen enthaltender Polyether-Polyole beispielsweise mit einem Aminogruppen enthaltenden Startermolekül gearbeitet wird das bevorzugt wenigstens 2 aktive Wasserstoffatome enthält. Als Alkylenoxide seien beispielsweise genannt: Ethylenoxid, 1,2- bzw. 1,3-Propylenoxid, 1,2- bzw. 2,3-Butylenoxid oder Styroloxid. Zur Einführung der Stickstoff enthaltenden Gruppen können als Startermoleküle verwendet werden beispielsweise Ammoniak, Hydrazin bzw. Alkylhydrazine, gegebenenfalls substituierte Guanidine, Diamine, die auch im Stickstoff teilsubstituiert sein können, Aminoalkohole und vergleichbare Verbindungen. Sinngemäß gelten die hier zu Herstellung von Polyester- bzw. Polyether-Polyolen gemachten Angaben auch zur Herstellung entsprechender stickstoffgruppenfreier Polyester-bzw. Polyether-Polyole, die als solche oder in Abmischung mit den Stickstoffgruppen enthaltenden Verbindungen zum Einsatz kommen können.

Als Polyisocyanatkomponente sind aromatische Polyisocyanate bzw. Isocyanatgemische besonders bevorzugt. Als Beispiele für solche aromatischen Polyisocyanate sind zu nennen: Toluylendiisocyanate, insbesondere auch die handelsüblichen Rohgemische aus den Stellungsisomeren 2,4- und 2,6-Toluyldiisocyanaten, Diphenylmethandiisocyanat bzw. seine handelsüblichen Rohmischungen, die noch oligomere Polyphenylpolymethylenpolyisocyanate enthalten und flüssig sind.

Die Polyole bzw. Polyol-Gemische werden mit den Polyisocyanaten in solchen Mengenverhältnissen zur Umsetzung gebracht, daß die isocyanatgruppenhaltigen Prepolymeren bevorzugt ein Gehalt an freien Isocyanatgruppen im Bereich von etwa 5 bis 25 Gewichtsprozent, insbesondere im Bereich von etwa 10 bis 20 Gewichtsprozent — jeweils bezogen auf das Gewicht des Prepolymeren — aufweisen. Die Umsetzung zwischen Polyol und Isocyanat erfolgt üblicherweise im Temperaturbereich bis etwa 100°, vorzugsweise bei Normaltemperatur bis nur mäßig erhöhten Temperaturen.

Als Treibmittel kommen niedrig siedende Komponenten in Betracht, die sich bevorzugt unter den angewandten Drucken im Reaktionsgefäß verflüssigen und die bei Druckentspannung rasch verdampfen. Die Treibmittel müssen gegenüber den anderen Komponenten des Reaktionsgemisches inert sein. Geeignet sind beispielsweise halogenierte Kohlenwasserstoffe mit Siedepunkten unterhalb etwa 30°C bei Normalbedingungen. Geeignet sind beispielsweise Monochlordifluormethan, Dichlormonofluormethan, Dichlordifluormethan und/oder Trichlorfluormethan. Geeignet sind weiterhin leicht flüchtige Kohlenwasserstoffe, beispielsweise Propan, Isobutan und/oder Dimethylether bzw. Gemische aus den halogenierten Kohlenwasserstoffen und leicht flüchtigen nicht halogenierten Kohlenwasserstoffen.

Unterteilt man die Bestandteile des 1-Komponentengemisches in die Gruppen

A: Polyole + Hilfsstoffe
B: Polyisocyanate
C: Treibmittel

so gilt als allgemeiner Anhalt zur Stoffzusammensetzung, daß jeder dieser Bestandteile A, B und C gewichtsmäßig etwa 1/3 der Gesamtmischung ausmachen kann.

Allgemeiner gilt das Folgende:

Das Treibmittel C liegt üblicherweise im Bereich von 20 bis 45 Gewichtsprozent der gesamten Mischung aus A, B und C. Das Gewichtsverhältnis von A:B liegt üblicherweise im Bereich von 0,7:1 bis 1:1 Gewichtsteilen — wobei Mittelwerte von etwa 30 Gewichtsprozent Weichmacher und/oder Flammschutzmittel und 3 Gewichtsprozent Schaumstabilisator auf Basis von Siloxanoxyalkylen-Mischpolymerisaten — jeweils bezogen auf das Gewicht der Komponente A — zugrunde gelegt sind. Der erfindungsgemäße Zusatz von 0,015 bis 0,1 Gewichtsprozent an Dimethylsilikonölen bzw. entsprechenden perfluorierten Polysiloxanen bezieht sich rechnerisch auf die Komponente A.

Die Herstellung der erfindungsgemäßen reaktiven 1-Komponentensystem erfolgt zweckmäßig durch Mischen der Hydroxygruppen enthaltenden Ausgangsmaterialien mit den Weichmachern und dem verflüssigten bzw. flüssigen Isocyanat in einer trockenen Druckapparatur. Gleichzeitig oder

anschließend kann das Treibmittel zugesetzt werden. Es ist aber auch möglich, die Komponenten direkt zusammen mit dem Treibmittel in Aerosol-Dosen einzudosieren.

Neben den bisher genannten Hilfsmitteln können auch weitere bekannte Zusatzstoffe zum Einsatz kommen. Genannt seien beispielsweise Farbstoffe und Hydrolyse-Schutzmittel.

Die erfindungsgemäßen schaumfähigen 1-Komponentengemische sind lagerstabil. Sie können beispielsweise zum Verbinden und Ausfüllen von Werkstoffteilen wie Türen, Türzargen oder Hohlräumen in Bauten oder in Automobilen verwendet werden. Sie zeichnen sind durch eine extrem geringe, nachträgliche Volumenausdehnung aus. Im allgemeinen werden hier Werte von etwa 2% nicht überschritten, in den bevorzugten Zusammensetzungen der Erfindung liegt die nachträgliche Volumenausdehnung unterhalb etwa 1% und insbesondere im Bereich von höchstens etwa 0,5%. Die Bestimmung dieser nachträglichen Volumenausdehnung erfolgt dabei gemäß den "Richtlinien zur Prüfung von Einkomponenten-Polurethan-Schaumstoff" (AK-PUR-Schaum) des Süddeutschen Kunststoff-Zentrums von Juni 1980 (SB.7.1/680) — vergleiche insbesondere 5.7.2 und 5.7.3 der Richtlinien. Die hohe Formstabilität der erfindungsgemäß hergestellten Polyurethan-Schäume zeigt sich selbst unteverschärften Alterungssbedingungen, beispielsweise in der Alterung bei Temperaturen von etwa 70°C. Die erfindungsgemäßen Materialien sind damit allen bisher bekannten 1-Komponenten-Polyurethan-Schaummaterialien deutlich überlegen.

Die Mitverbindung von Dimethylpolysiloxanen ist insbesondere in der älteren Literatur zur Herstellung von Polyurethan-Schaumstoffen gelegentlich erwähnt worden. So schlägt die GB—PS 1 077 888 die Mitverwendung sehr geringer Mengen einer wäßrigen Emulsion von Dimethylpolysiloxanen bei der Polyurethan-Schaumstoff-Herstellung vor, um eine dem Naturschwamm ähnlichere Porenstruktur zu erzeugen. Anstelle einer gleichmäßigen Porenstruktur sollen Poren bzw. Zellen verschiedener Größe erzeugt werden. Die Zellregulierung und insbesondere Beeinflussung der Zellgröße durch Mitverwendung von Dimethylpolysiloxan, insbesondere in Polyetherschaumstoffen wird beispielsweise auch erwähnt in "Kunststoff-Handbuch" Band VII, Polyurethane, 1966 Carl Hanser-Verlag, München, siehe dort beispielsweise Seite 105, letzter Absatz sowie Seiten 448/449. Hier sollen bei Polyether-Isocyanaten asls Ausgangsmaterial für die Polyurethan-Schaumstoff-Bildung Polydimethylsiloxanverbindungen eingesetzt werden, wobei es heißt, daß bei Verwendung von zu wenig Silikonöl nur wenige, aber große Gasblasen gebildet werden, die aus dem Gemisch entweichen, während beim Zusatz von zu viel Silikönol sich viele, sehr kleine Zellen bilden, wobei zwar zunächst die volle Schaumhöhe erreicht wird, dann jedoch der Schaum zusammenenfällt. Die auf Seite 449 aa0 angegebenen speziellen Rezepturen enthalten im Vergleich mit der erfindungsgemäßen Lehre wesentliche größere Mengen an Polydimethylsiloxan.

Größere Menge an speziellen Silikonölen werden auch in den Zweikomponentensystemen nach DE—C—11 28 133 unter Verwendung besonderer Mischeinrichtungen US—PS 27 64 565) zur Regulierung der Porenstruktur eingesetzt. Jedoch wird auch deutlich gemacht, daß man selbst bei den dort eingesetzten speziellen Silikonverbindungen die kritischen Untergrenzen nicht unterschreiten darf, um nicht technisch undbrauchbar Produkte, durch sogenanntes Verkochen, zu erhalten.

Alle diese Vorschläge des Standes der Technik betreffen keine 1-Komponentenmischungen der erfindungsgemäßen Art mit ihren besonderen technischen Problemen der daraus durch Entspannen und Verdampfen des Treibmittels gewonnenen Polyurethanschäume.

Bespiele:

Über einen Mischkopf wurden direkt die zur Präpolymerenbildung notwendigen vorgemischten Komponenten I + II in trockene Aerosoldosen eindosiert.

Komponente I:

| | |
|---|---|
| oxypropyliertes Triethanolamin (Mol-Gew. 100 | 543 g |
| Polypropylenglykol (Mol-Gew.-1 000 | 134 g |
| Diphenylkresylphosphat | 284 g |
| Siloxan-oxyalkylen-mischpolymerisat (80% Oxyalkylen; 20% Siloxaneinh.) | 39 g |

Komponente II:

| | |
|---|---|
| techn. flüssiges Diphenylmethandiisocyanat | 1 250 g |

Anschließend wurde in die Dosen die erforderliche Menge an verflüssigtem Treibmittel (Dichlordifluormethan) eingefüllt. Die erfindungsgemäßen Zusätze an Dimethylpolysiloxan bzw. handelsüblichen Fluorsilikonöle (Polyalkylsiloxan, die perfluoriert Seitenketten enthalten) wurden vor dem Mischen der Komponente I zugesetzt.

Nach den "Richtlinien zur Prüfung von Einkomponenten-Polyurethan-Schaumstoff" (AK-PUR-Schaum) des Süddeutschen Kunststoff-Zentrums vom Juni 1980 (SB.7.1/680) wurden die verschäumten Schaumstoffe untersucht und festgestellt, daß sie den üblichen Anforderungen genügten. Im nachstehenden sind die Werte für die besonders gute Formstabilität wiedergegeben. In der nachfolgenden Tabelle sind in Abhängigkeit vom Prozentsatz (bezogen auf Komponente I) des eingesetzten Dimethylpolysiloxans bzw. Fluorsilikonöls, welche durch ihre Viskosität gekennzeichnet sind, die Werte für $\Delta h$ und die prozentuale Änderung als Maß für die Formstabilität nach 1-wöchiger Lagerung bei +40°C im

Umluftofen (vergl. 5.7.2. und 5.7.3 der Richtlinien) wiedergegeben.

TABELLE

| Dimethylpolysiloxan (Gew.-% bezogen auf Polyol | | Maßänderung | |
|---|---|---|---|
| Gew.-% | $mm^2 \cdot s^{-1}$ | Δh | % |
| 0,025 | 100 | 0,44 | 2,20 |
| 0,05 | 100 | <0,1 | <0,5 |
| 0,05 | 10 000 | 0,1 | 0,5 |
| 0,05 | 300 000 | 0,12 | 0,6 |
| Fluorsilikonöl Gew.-% | $mm^2 \cdot s^{-1}$ | Δh | % |
| 0,05 | 300 | 0,28 | 1,4 |
| 0,5 | 1 000 | 0,3 | 1,5 |

Vergleichsversuch ohne erfindungsgemäßen Zusatz

a) 1,88 Δh 9,4% Mäßänderung

b) 2,0 Δ 10,0% Mäßanderung

## Patentansprüche

1. Als Konstruktionswerkstoff geeignete Polyurethanschaumstoffe bildende 1-Komponentensysteme, die in einem Druckbehälter vorliegen, und Mischungen darstellen von

a) Isocyanatgruppen enthaltenden Präpolymeren aus der Umsetzung von Hydroxylgruppen enthaltenden Polyestern und/oder Polyethern (Polyole) mit Polyisocyanaten,

b) üblichen Hilfsstoffen für Polyurethanschäume,

c) Treibmitteln, die im Druckbehälter verflüssigt vorliegen, bei Druckentspannung rasch verdampfen und vorzugsweise einen Siedepunkt unterhalb etwa 30°C bei Normalbedingungen aufweisen, und

d) Organopolysiloxanen dadurch gekennzeichnet, daß sie als Komponente d) 0,015 bis 0,1 Gewichtsprozent — bezogen auf Polyole + Hilfsstoffe — Dimethylpolysiloxane und/oder perfluorierte Alkylgruppen enthaltende Polysiloxane enthalten, die eine dynamische Viskosität zwischen 20 und 300 000 $mm^2 \cdot s^{-1}$ (bei 25°C) insbesondere zwischen 100 und 10 000 $mm^2 \cdot s^{-1}$ (25°C), aufweisen.

2. Polyurethanschaumstoffe bildende 1-Komponentensystem nach Anspruch 1, dadurch gekennzeichnet, daß die Dimethylpolysiloxane und/oder perfluorierte Alkylgruppen enthaltenden Polysiloxane in Mengen von 0,02 bis 0,05 Gewichtsprozent — bezogen auf Polyol + Hilfsstoffe — vorliegen.

3. Polyurethanschaumstoffe bildende 1-Komponentensysteme nach Ansprüchen 1 bis 2, dadurch gekennzeichnet, daß die Polysiloxanverbindungen zusammen mit Schaumstabilisatoren auf Basis siliciumorganischer Verbindungen vorliegen, wobei als Schaumstabilisatoren insbesondere Siloxan-xyalkylen-Mischpolymerisate zum Einsatz kommen, die bevorzugt etwa 5 bis 25% Siloxaneinheiten und 95 bis 75% Oxyalkylengruppierungen aufweisen.

4. Polyurethanschaumstoffe bildende 1-Komponentensysteme nach Anspruch 3, dadurch gekennzeichnet, daß die Siliciumorganischen Schaumstabilisatoren in Mengen von 1 bis 5 Gewichtsprozent — bezogen auf Polyol + Hilfsstoffe — vorliegen.

5. Verfahren zur Herstellung von als Konstruktionswerkstoff geeigneten Polyurethanschaumstoffe bildenden 1-Komponentensystem, die in einem Druckbehälter vorliegen, und Mischungen darstellen von

a) Isocyanatgruppen enthaltenden Präpolymeren aus der Umsetzung von Hydroxylgruppen enthaltenden Polyestern und/oder Polyethern (Polyole) mit Polyisocyanaten,

b) üblichen Hilfsstoffen für Polyurethanschäume,

c) Treibmitteln, die im Druckbehälter verflüssigt vorliegen, bei Druckentspannung rasch verdampfen und vorzugsweise einen Siedepunkt unterhalb etwa 30°C bei Normalbedingungen aufweisen, und

d) Organopolysiloxanen dadurch gekennzeichnet, daß man als Komponente d) 0,015 bis 0,1 Gewichtsprozent — bezogen aus Polyole + Hilfsstoffe — Dimethylpolysiloxane und/oder perfluorierte Alkylgruppen enthaltende Polysiloxane, die eine dynamische Viskosität zwischen 20 und 300 000 $mm^2 \cdot s^{-1}$ (bei 25°C) aufweisen, wobei insbesondere die dynamische Viskosität zwischen 100 und 10 000 $mm^2 \cdot s^{-1}$ (25°C) liegt, zusetzt.

6. Verfahren nach Anspruch 5, dadurch gekennzeichnet, daß mas 0,02 bis 0,05 Gewichtsprozent Dimethylpolysiloxane bzw. perfluorierte Alkylreste enthaltende Polysiloxane zusetzt.

## Revendications

1. Systèmes à 1 composant formateurs de matière cellulaire en polyuréthane, convenant comme matériau de construction, qui se présentent dans un récipient à pression et qui constituent des mélanges

a) de prépolymères contenant des groupes isocyanate obtenus par la réaction de polyesters et/ou polyéthers (polyols) contenant des groupes hydroxyle avec des polyisocyanates,

b) d'auxiliaires usuels pour mousses de polyuréthanes,

c) d'agents expanseurs se présentent à l'état liquéfié dans un récipient à pression, qui se vaporisent rapidement par détente de la pression et qui présentent de préférence un point d'ébullition inférieur à 30°C dans les conditions normales et

d) d'organopolysiloxanes, caractérisés en ce qu'ils contiennent comme composant d) 0,015 à 0,1% en poids — par rapport aux polyols + auxiliaires — de diméthylpolysiloxanes et/ou de polysiloxanes contenant des groupes alcoyle perfluorés, lesquels présentent une viscosité dynamique entre 20 et 300 000 $mm^2 \cdot s^{-1}$ (à 25°C), particulièrement entre 100 et 10 000 $mm^2 \cdot s^{-1}$ (à 25°C).

2. Systèmes à 1 composant formateurs de matière cellulaire en polyuréthane selon la revendication 1, caractérisés en ce que les diméthylpolysiloxanes et/ou les polysiloxanes contenant des groupes alcoyle perfluorés sont présents en des quantités de 0,02 à 0,05% en poids par rapport au polyol + auxiliaires.

3. Systèmes à 1 composant formateurs de matière cellulaire en polyuréthane selon les revendications 1 à 2, caractérisés en ce que les composés de polysiloxane se présentent conjointement avec des stabilisants de mousse à base de composés organosiliciques, en utilisant comme stabilisants de mousse en particulier des copolymères siloxaneoxyalcoylène qui présentent de préférence environ 5 à 25% d'unités siloxane et 95 à 75% de groupements oxyalcoylène.

4. Systèmes à 1 composant formateurs de matière cellulaire en polyuréthane selon la revendication 3, caractérisés en ce que les stabilisants de mousse organosiliciques sont présents en des quantités de 1 à 5% en poids par rapport au polyol + auxiliaires.

5. Procédé de fabrication de systèmes à 1 composant formateurs de matière cellulaire en polyuréthane, convenant comme matériau de construction, qui se présentent dans un récipient à pression et qui constituent des mélanges

a) de prépolymères contenant des groupes isocyanate obtenus par la réaction de polyesters et/ou polyéthers (polyols) contenant des groupes hydroxyle avec des polyisocyanates,

b) d'auxiliaires usuels pour mousses de polyuréthanes,

c) d'agents expanseurs se présentent à l'état liquéfié dans le récipient à pression, qui se vaporisent rapidement par détente de la pression et qui présentent de préférence un point d'ébullition inférieur à 30°C dans les conditions normales et

d) d'organopolysiloxanes, caractérisé en ce qu'on ajoute comme composant d) 0,015 à 0,1% en poids — par rapport aux polyols + auxiliaires — de diméthylpolysiloxanes et/ou de polysiloxanes contenant des groupes alcoyle perfluorés, lesquels présentent une viscosité dynamique entre 20 et 300 000 $mm^2 \cdot s^{-1}$ (à 25°C), la viscosité dynamique se situant particulièrement dans l'intervalle entre 100 et 10 000 $mm^2 \cdot s^{-1}$ (à 25°C).

6. Procédé selon la revendication 5, caractérisé en ce qu'on ajoute 0,02 à 0,05% en poids de diméthylpolysiloxanes ou de polysiloxanes contenant des radicaux alcoyle perfluorés.

**Claims**

1. One-component systems which form polyurethane foams suitable as a structural material and which are accommodated in a pressurized container, being mixtures of

a) prepolymers containing isocyanate groups from the reaction of polyesters and/or polyethers containing hydroxyl groups (polyols) with polyisocyanates,

b) standard auxiliairies for polyurethane foams,

c) blowing agents which are present in liquid form in the pressurized container, which vaporize rapidly when the pressure is released and which preferably have a boiling point below about 30°C under normal conditions and

d) organopolysiloxanes,

characterized in that they contain as component d) from 0.015 to 0.1% by weight, based on polyols + auxiliaries, dimethyl polysiloxanes and/or polysiloxanes containing perfluorinated alkyl groups which have a dynamic viscosity in the range from 20 to 300,000 $mm^2 \cdot s^{-1}$ (at 25°C) and more especially in the range from 100 to 10,000 $mm^2 \cdot s^{-1}$ (at 25°C).

2. Polyurethane-foam-forming one-component systems as claimed in claim 1, characterized in that the dimethyl polysiloxanes and/or polysiloxanes containing perfluorinated alkyl groups are present in quantities of from 0.02 to 0.05% by weight, based on polyol + auxiliaires.

3. Polyurethane-foam-forming one-component systems as claimed in claims 1 and 2, characterized in that the polysiloxane compounds are present together with foam stabilizers based on organosilicon compounds, the foam stabilizers used being in particular siloxane-oxyalkylene copolymers preferably containing from about 5 to 25% siloxane units and from 95 to 75% oxyalkylene groups.

4. Polyurethane-foam-forming one-component systems as claimed in claim 3, characterized in that the organosilicon foam stabilizers are present in quantities of from 1 to 5% by weight, based on polyol + auxiliaires.

5. A process for the production of one-component systems which form polyurethane foams suitable as a structural material and which are accommodated in a pressurized container, being mixtures of

a) prepolymers containing isocyanate groups from the reaction of polyesters and/or polyethers containing hydroxyl groups (polyols) with polyisocyanates,

b) standard auxiliairies for polyurethane foams,

c) blowing agents which are present in liquid form in the pressurized container, which vaporize rapidly when the pressure is released and which preferably have a boiling point below about 30°C under normal conditions and

d) organopolysiloxanes,

characterized in that dimethyl polysiloxanes

and/or polysiloxanes containing perfluorinated alkyl groups which have a dynamic viscosity in the range from 20 to 300,000 $mm^2 \cdot s^{-1}$ (at 25°C) and more especially in the range from 100 to 10,000 $mm^2 \cdot s^{-1}$ (at 25°C) are added as component d) in a quantity of from 0.015 to 0.1% by weight.

6. A process as claimed in claim 5, characterized in that the dimethyl polysiloxanes or the polysiloxanes containing perfluorinated alkyl groups are added in a quantity of from 0.02 to 0.05% by weight.